# FASCICULE DE BREVET EUROPEEN

(11) **EP 3 740 372 B1**
(45) Date de publication et mention de la délivrance du brevet: **04.01.2023**
(21) Numéro de dépôt: 19706729.1
(22) Date de dépôt: 17.01.2019
(51) Int. Cl.: B29C 64/106, B29C 64/336, B29C 64/209, B33Y 30/00

(54) **OUTIL DE DÉPÔT EN 3 DIMENSIONS DE MATIÈRE PAR EXTRUSION**
WERKZEUG ZUM DREIDIMENSIONALEN AUFTRAGEN VON MATERIAL DURCH EXTRUSION
TOOL FOR DEPOSITING MATERIAL IN THREE DIMENSIONS BY EXTRUSION

(30) Priorité: 18.01.2018 FR 1850404
(43) Date de publication de la demande: 25.11.2020
(73) Titulaire: Zero D., 67140 Barr (FR); Association Pour La Recherche Et Le Développement De Méthodes Et Processus Industriels "Armines", 75006 Paris (FR)
(72) Inventeur: DOREZ, Yannick, 67140 BARR (FR); LACRAMPE, Marie-France, 62530 HERSIN COUPIGNY (FR); SOULESTIN, Jérémie, 59450 SIN LE NOBLE (FR)
(74) Mandataire: Merckling, Norbert
(86) Numéro de dépôt international: PCT/FR2019/050094
(87) Numéro de publication internationale: WO 2019/141946

(56) Documents cités:
- WO-A1-2017/152142
- CN-A- 106 985 380
- US-A1- 2015 174 824
- US-A1- 2015 367 576

## Description

### Domaine technique

La présente invention se rapporte au domaine des dispositifs de dépose de polymères fondus et de mise en forme sur un support par un système automatisé.

L'invention concerne plus particulièrement le domaine des dispositifs de fabrication additive, d'impression 3D, de sur-impression 3D ou de tout autre dispositif similaire.

### Etat de la technique

La fabrication additive à base de matériaux polymères, connue sous la dénomination impression 3D par le grand public, consiste à déposer et superposer des couches de matières sur un support avec un dispositif adapté selon les cordonnées transmises par un fichier 3D, ce dispositif comportant généralement un système automatisé de type robot multiaxes ou portique.

La technique de fabrication de pièces la plus connue repose sur une technique de modelage par dépôt de filament polymères en fusion de section circulaire à partir d'une bobine de fil de matière thermoplastique. Cette technique consiste à déposer couche par couche un filament ou jonc de matière thermoplastique fondu souvent au-dessus de 200°C qui, en se superposant, donne forme à l'objet. La tête d'impression se déplace selon des coordonnées X, Y et Z (longueur, largeur et hauteur) transmises par un fichier 3D correspondant au modèle 3D de l'objet à fabriquer. Selon cette technique antérieure, le jonc est mono-matière, de diamètre constant et il est déposé selon un axe d'extrusion habituellement vertical, ou du moins perpendiculaire au plan de dépose.

Si elle permet de fabriquer des objets de toutes sortes ou de réparer des objets cassés, cette technique de fabrication présente aussi de nombreuses limitations.

Tout d'abord, la technique classique de modelage par dépôt de filament en fusion est très lente, car le diamètre du fil de matière thermoplastique déposé est très faible et la matière est par conséquent déposée en très petite quantité. Une augmentation du diamètre du fil permet de répondre à ce problème de lenteur, mais pose alors des problèmes d'esthétisme et de solidité de l'objet fabriqué qui sont dus à la superposition de joncs de matière de forme cylindrique qui adhèrent mal les uns aux autres en raison de leur section circulaire. Malgré des améliorations constantes, cette technique est d'ailleurs connue pour le manque de solidité des objets fabriqués et pour l'aspect peu esthétique de ces derniers, qui présentent un aspect grumeleux au lieu d'être lisses.

A ce problème de lenteur, s'ajoute généralement le fait que la technique de modelage par dépôt de filament en fusion est connue pour ne pas permettre de fabriquer des objets tridimensionnels de grandes dimensions.

Une autre limitation de la technique classique de modelage par dépôt de filament en fusion est qu'elle ne permet de déposer qu'une seule matière à la fois, et ne permet pas de déposer plusieurs matières distinctes simultanément. Pour des raisons évidentes de solidité de l'objet fabriqué, la matière déposée doit en outre se souder à celle déposée dans les autres strates, ce qui limite le nombre de matières pouvant être utilisées par cette technique.

La technique classique de modelage par dépôt de filament en fusion n'est pas non plus prévue pour permettre de renforcer l'objet fabriqué par l'ajout d'un renfort continu, par exemple une fibre de verre ou de carbone, lors du dépôt de filament en fusion. En effet, le dépôt de matière thermoplastique étant vertical, envisager l'ajout d'un tel renfort au sein de la matière déposée ne semble pas techniquement adapté.

La publication US2015/174824 A1 divulgue un bloc de distribution selon le préambule de la revendication 1.

### Description de l'invention

L'objet de la présente invention vise par conséquent à pallier les inconvénients de l'art antérieur en proposant un nouveau dispositif de fabrication additive basé sur un bloc de distribution selon la revendication 1 comprenant une filière assurant le dépôt de matière, ladite filière permettant un dépôt de matière plus important et plus rapide que les techniques antérieures, avec une solidité améliorée pour l'objet fabriqué, et avec la possibilité de fabriquer des objets tridimensionnels de grandes dimensions.

Un mode de réalisation de la présente invention vise à proposer un nouveau dispositif de fabrication additive permettant l'utilisation de plusieurs matières différentes simultanément, sans mélange de celles-ci, voire même de pouvoir ajouter un renfort continu au sein de la ou des matières(s) déposée(s).

Les objets assignés à l'invention sont atteints à l'aide d'un bloc de distribution selon la revendication 1.

L'expulsion latérale de la matière thermoplastique en fusion procure de nombreux avantages et permet notamment d'adapter l'orifice d'extrusion à différents besoins. Elle permet notamment une expulsion de la matière thermoplastique en fusion dans un plan parallèle au plan de dépose de la matière extrudée.

Selon un exemple de mise en oeuvre de l'invention, au moins dans sa partie distale, le canal de passage fait un angle β strictement inférieur à 90° par rapport à l'axe d'extrusion, préférentiellement inférieur à 60° par rapport à l'axe d'extrusion et plus préférentiellement inférieur à 30° par rapport à l'axe d'extrusion.

Ceci permet d'éviter de déposer de la matière sous forme de jonc et offre une plus grande liberté de forme. Un angle faible est nécessaire à la matière fondue pour son passage à travers l'orifice de sortie.

Selon un autre exemple de mise en oeuvre de l'invention, l'orifice d'extrusion présente une surface d'extrusion s'étendant dans un plan présentant un angle préférentiellement compris entre 45° et 90° et plus préférentiellement compris entre 80° et 90° par rapport au plan de dépose de la matière thermoplastique extrudée. Ainsi, la filière d'extrusion peut se présenter sous la forme d'un simple parallélépipède ou sous la forme d'un parallélépipède à face tronquée, ce qui simplifie sa fabrication et réduit son coût.

Selon un exemple supplémentaire de mise en oeuvre de l'invention, l'orifice d'extrusion présente une largeur supérieure à sa hauteur, préférentiellement avec une largeur supérieure à une fois et demi sa hauteur, et plus préférentiellement avec une largeur supérieure à deux fois sa hauteur.

Ainsi, la matière thermoplastique en fusion peut être déposée en grandes quantités par rapport aux filières classiques, ce qui permet notamment un gain de temps lors de la fabrication d'un objet tridimensionnel.

Préférentiellement, l'orifice d'extrusion fait de 0,5 à 10 millimètres de haut (épaisseur de la couche de matière déposée) et de 1,0 à 50 millimètres de large (largeur de la couche de la matière déposée).

Selon un exemple de mise en oeuvre de l'invention, l'orifice d'extrusion présente un contour de forme générale sensiblement rectangulaire.

Cette forme spécifique, en plus de permettre de déposer une grande quantité de matière thermoplastique en fusion lors de chaque passage, permet notamment, d'augmenter la surface de contact entre les couches, de bien faire adhérer les différentes couches déposées, d'améliorer l'aspect esthétique (rugosité de surface) de l'objet et de fournir une bonne solidité pour l'objet fabriqué.

Selon un autre exemple de mise en oeuvre de l'invention, le contour de forme de l'orifice d'extrusion comporte au moins une forme en creux ou en relief dans sa partie opposée au plan de dépose de la matière extrudée de sorte que la matière thermoplastique déposée présente une forme en contre-dépouille sur ses faces supérieure et inférieure. Ceci permet avantageusement de créer un système d'ancrage mécanique des couches.

Cette forme en creux ou en relief permet avantageusement d'améliorer l'adhérence des différentes couches les unes avec les autres, notamment par ancrage mécanique des différentes couches déposées.

Selon un exemple supplémentaire de mise en oeuvre de l'invention, la filière d'extrusion comporte en outre au moins un canal de passage supplémentaire dans lequel est introduit au moins un renfort continu et qui communique avec l'orifice d'extrusion de sorte que ledit renfort continu soit déposé simultanément avec la matière extrudée.

Le bloc de distribution selon l'invention permet donc avantageusement de renforcer la solidité de l'objet fabriqué au moyen d'un renfort continu.

Selon un exemple de mise en oeuvre de l'invention, le renfort continu est enrobé par la matière extrudée lors de sa dépose.

Ainsi, le renfort continu est noyé dans la matière thermoplastique pour une plus grande solidité de l'objet fabriqué, et il n'est pas visible, aussi ne nuit-il pas à l'esthétisme de l'objet fabriqué.

Selon un autre exemple de mise en oeuvre de l'invention, la filière d'extrusion comporte un premier canal de passage pour une première matière thermoplastique et un second canal de passage pour une seconde matière thermoplastique différente de la première matière thermoplastique, lesdits canaux de passage débouchant tous deux au niveau d'un même orifice d'extrusion, le premier canal de passage étant prévu sensiblement au centre du second canal de passage de sorte que la matière extrudée déposée soit formée d'un coeur constitué de la première matière thermoplastique et enveloppé par une peau constituée de la seconde matière thermoplastique.

Ainsi, grâce à la filière, il est non seulement possible de co-extruder simultanément deux matières thermoplastiques différentes, mais il est également possible de co-extruder simultanément ces deux matières thermoplastiques sous la forme d'un coeur dans une première matière thermoplastique et enveloppé par une peau constituée d'une seconde matière thermoplastique. Il est ainsi possible d'utiliser une matière thermoplastique pour le coeur qui présente des caractéristiques intéressantes pour l'objet fabriqué mais qui présente des difficultés pour se souder à la couche de matière précédemment déposée. Dans ce cas, c'est la matière thermoplastique formant l'enveloppe qui assure cette fonction de soudage, et qui assure la cohésion des différentes couches déposées.

Dans le bloc de distribution selon la revendication 1 et grâce à la broche rotative, la filière d'extrusion peut ainsi déposer de la matière thermoplastique en fusion selon n'importe quel schéma ou trajectoire car la matière thermoplastique en fusion est déposée dans un plan parallèle au plan de dépose de la matière extrudée avec la possibilité de former des courbes lors des changements de direction de la filière d'extrusion, sans avoir à interrompre la dépose de matière thermoplastique en fusion.

Selon l'invention, la broche rotative est une pièce de forme sensiblement cylindrique logée à rotation dans un évidement cylindrique prévu dans le corps du bloc de distribution.

La broche rotative comporte au moins une gorge annulaire ouverte vers la face interne de l'évidement cylindrique du corps du bloc de distribution, cette gorge annulaire communiquant à la fois avec les canaux de passage de la filière d'extrusion et avec au moins un canal de passage prévu dans le corps du bloc de distribution et communiquant avec un dispositif d'alimentation en matière thermoplastique.

Cette conformation permet avantageusement d'alimenter la filière d'extrusion en une ou plusieurs matières thermoplastiques en fusion quels que soient les mouvements de rotation de la broche rotative.

Les objets assignés à l'invention sont atteints également à l'aide d'un système d'extrusion comprenant un bloc de distribution tel que précédemment décrit, comprenant au moins un dispositif d'alimentation en matière thermoplastique et des organes d'actionnement pour déplacer le bloc de distribution en translation selon trois axes orthogonaux ou suivant un déplacement vectoriel et pour déplacer la broche rotative en rotation dans un plan parallèle au plan de dépose de la matière extrudée. Le recours à un déplacement vectoriel permet de déposer des couches non plus uniquement planes mais également des couches courbes ou gauches. Cela permet également de choisir l'orientation d'un renfort pour renforcer mécaniquement la pièce dans une direction privilégiée.

Un tel système d'extrusion permet non seulement de réaliser rapidement un objet tridimensionnel présentant une grande solidité et un aspect esthétique satisfaisant, mais il permet également de réaliser des objets tridimensionnels de grandes dimensions car les mouvements de la filière d'extrusion ne sont limités dans l'espace que par l'amplitude des mouvements de déplacement fournis par les organes d'actionnement. Si ces derniers comprennent un portique et/ou un bras robotique, ils peuvent facilement être dimensionnés pour la fabrication d'objets tridimensionnels de très grandes dimensions par rapport aux systèmes antérieurs.

Selon un autre exemple de mise en oeuvre de l'invention, le système d'extrusion comporte en outre un dispositif de préchauffage qui réchauffe le plan de dépose de la matière thermoplastique extrudée précédemment en amont de la filière d'extrusion avant la dépose d'une nouvelle couche de matière thermoplastique ou un dispositif de chauffage qui réchauffe superficiellement la surface de la couche de matière thermoplastique extrudée précédente.

Ce dispositif de préchauffage ou ce dispositif de chauffage permet notamment d'améliorer le soudage entre les différentes couches de matière déposée, ce qui accroit encore la solidité de l'objet tridimensionnel fabriqué.

Selon un exemple supplémentaire de mise en oeuvre de l'invention, le système d'extrusion comporte en outre un dispositif d'appui situé en aval de la filière d'extrusion et qui exerce une pression sur la couche de matière thermoplastique fondue qui est déposée.

Ce dispositif d'appui permet encore d'améliorer le soudage entre les différentes couches de matière déposée.

Selon un exemple de mise en oeuvre de l'invention, au moins une filière d'extrusion est prévue pivotante dans un plan vertical selon un angle d'inclinaison +/-a par rapport au support, ledit angle a étant tel que 0°< α≤90°, préférentiellement tel que 0°<α≤70°, et plus préférentiellement tel que 0°< α≤50°.

Cette caractéristique permet notamment à la filière d'extrusion de s'adapter à l'angle d'inclinaison du support et du plan de dépose. Elle permet également la dépose des différentes couches de matière de manière oscillante, d'abord dans un sens de déplacement du système d'extrusion avec un angle d'inclinaison +a, puis dans l'autre sens avec un angle d'inclinaison -a, de façon sensiblement similaire à la manière dont on manipule un pinceau pour peindre une surface.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue schématique en coupe d'une filière d'extrusion selon l'art antérieur ;
- la figure 2 est une vue schématique en coupe d'une filière d'extrusion;
- la figure 3 est une vue d'ensemble en perspective d'un système d'extrusion selon l'invention ;
- la figure 4 est une vue de profil du système d'extrusion de la figure 3 ;
- la figure 5 est une vue en coupe du système d'extrusion de la figure 3 selon l'axe de coupe représenté sur la figure 4 ;
- la figure 6 est une vue en coupe du système d'extrusion de la figure 3 selon l'axe de coupe représenté sur la figure 5 ;
- la figure 7 est une vue d'ensemble en perspective du bloc de distribution d'un système d'extrusion selon l'invention ;
- la figure 8 est une vue en coupe du bloc de distribution de la figure 7 selon l'axe de coupe représenté sur la figure 7 ;
- la figure 9 est une vue en coupe de trois couches de matière thermoplastique déposées sur un support par un système d'extrusion selon l'invention équipé d'une filière dont l'orifice d'extrusion présente un contour de forme générale sensiblement rectangulaire ;
- la figure 10 est une vue en coupe de trois couches de matière thermoplastique déposées sur un support par un système d'extrusion selon l'invention équipé d'une filière dont l'orifice d'extrusion présente un contour de forme générale adapté de sorte que la matière thermoplastique déposée présente une forme en contre-dépouille sur sa face supérieure ;
- la figure 11 est une vue en coupe de trois couches de matière thermoplastique déposées sur un support par un système d'extrusion selon l'invention équipé d'une filière adaptée pour déposer un renfort continu simultanément avec la matière extrudée ;
- la figure 12 est une vue en coupe de trois couches de matière thermoplastique déposées sur un support par un système d'extrusion selon l'invention équipé d'une filière adaptée pour que la matière extrudée déposée soit formée d'un coeur constitué d'une première matière thermoplastique et enveloppé par une peau constituée d'une seconde matière thermoplastique ;
- la figure 13 est une vue d'ensemble en perspective d'une filière dont l'orifice d'extrusion présente respectivement un contour de forme générale sensiblement rectangulaire ;
- la figure 14 est une vue en coupe de la filière de la figure 13 selon l'axe de coupe représenté sur la figure 13 ;
- la figure 15 est une vue d'ensemble en perspective d'une filière adaptée pour que la matière extrudée déposée soit formée d'un coeur constitué d'une première matière thermoplastique et enveloppé par une peau constituée d'une seconde matière thermoplastique ;
- la figure 16 est une vue en coupe de la filière de la figure 15 selon l'axe de coupe représenté sur la figure 15 ;

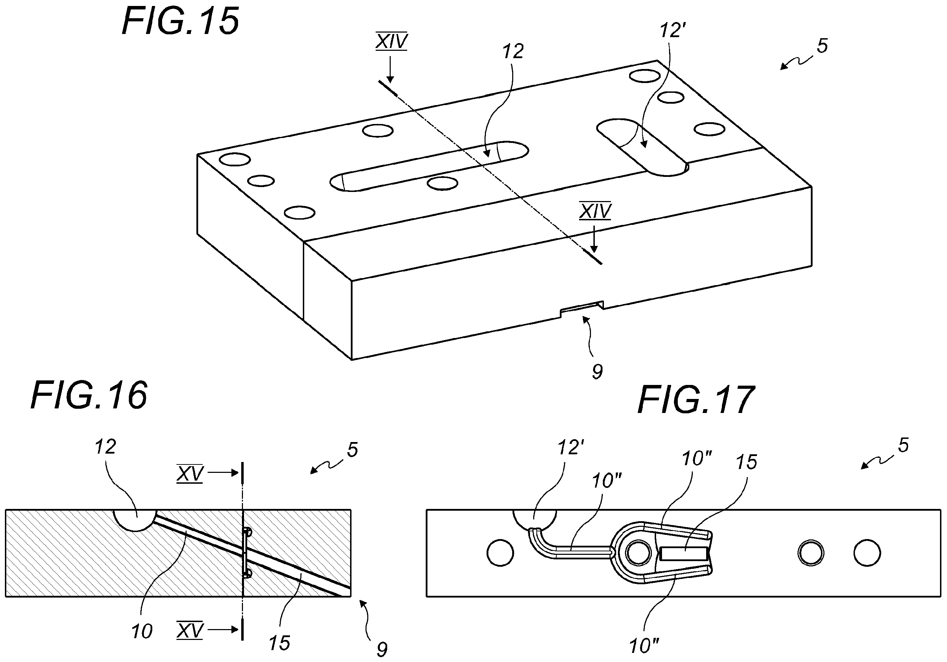

- la figure 15 est une vue en coupe de la filière de la figure 15 selon l'axe de coupe représenté sur la figure 16 ;

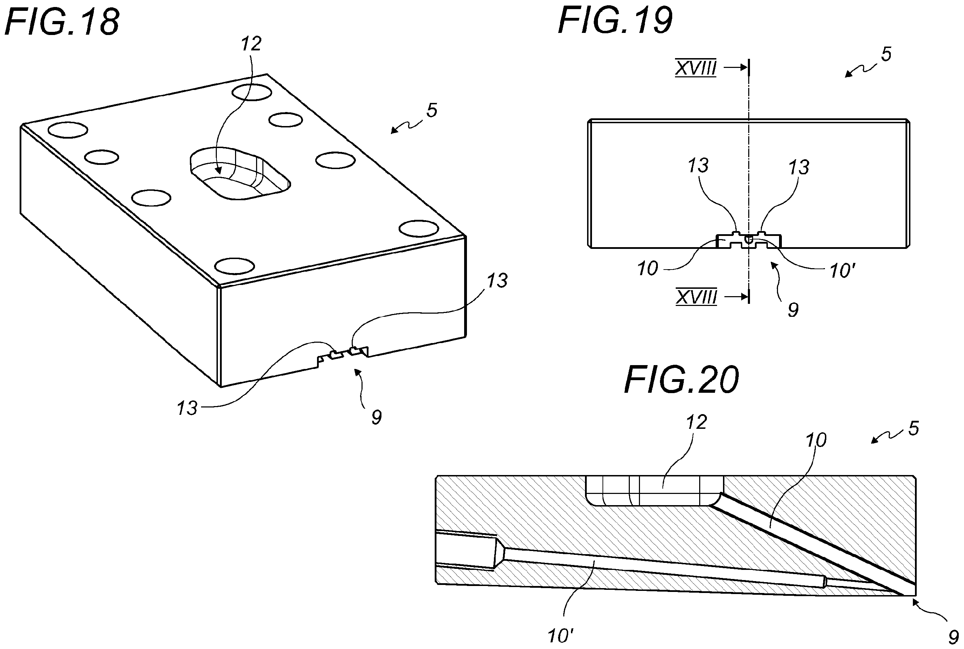

- la figure 18 est une vue d'ensemble en perspective d'une filière dont l'orifice d'extrusion présente respectivement un contour de forme générale adapté de sorte que la matière thermoplastique déposée présente une forme en contre-dépouille sur sa face supérieure, cette filière étant en outre adaptée pour déposer un renfort continu simultanément avec la matière extrudée ;
- la figure 19 est une vue de face de la filière de la figure 18 ;
- la figure 20 est une vue en coupe de la filière de la figure 18 selon l'axe de coupe représenté sur la figure 19 ;

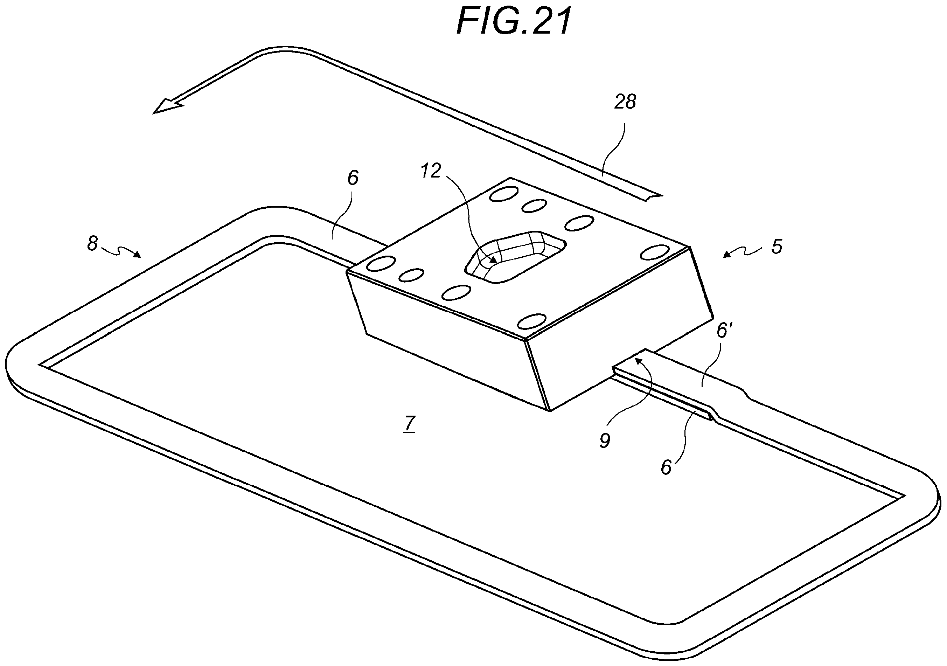

- la figure 21 est un exemple de tracé qui peut être réalisé par un système d'extrusion selon l'invention lors de la dépose de matière thermoplastique, où seule la filière d'extrusion est représentée ;

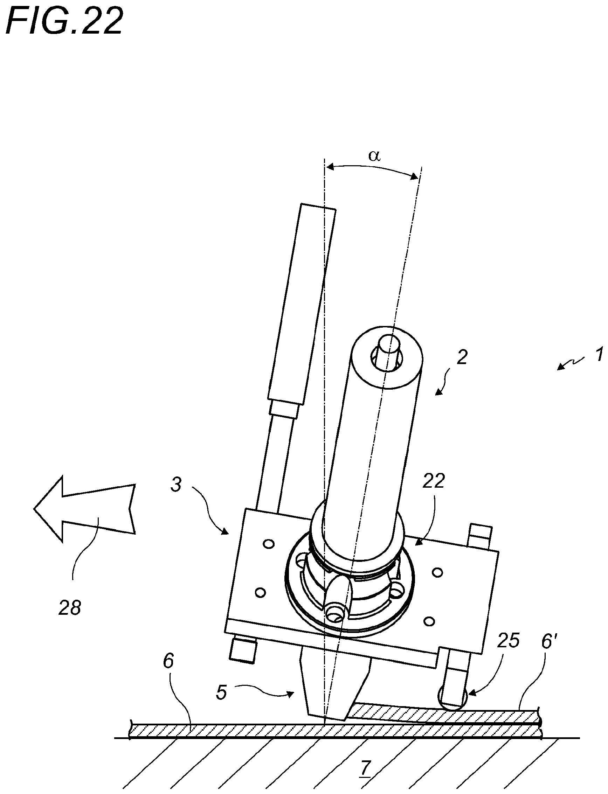

- la figure 22 est une vue de profil d'un système d'extrusion pivotant selon l'invention représenté incliné d'un angle α environ égal à 10°.

### Mode(s) de réalisation de l'invention

Les éléments structurellement et fonctionnellement identiques présents sur plusieurs figures distinctes, sont affectés d'une même référence numérique ou alphanumérique.

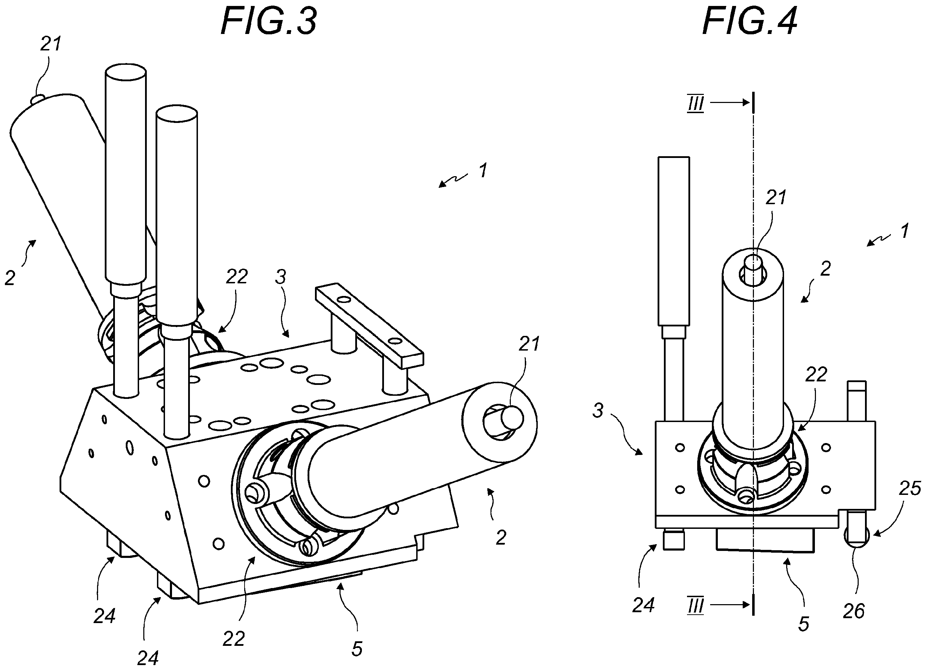

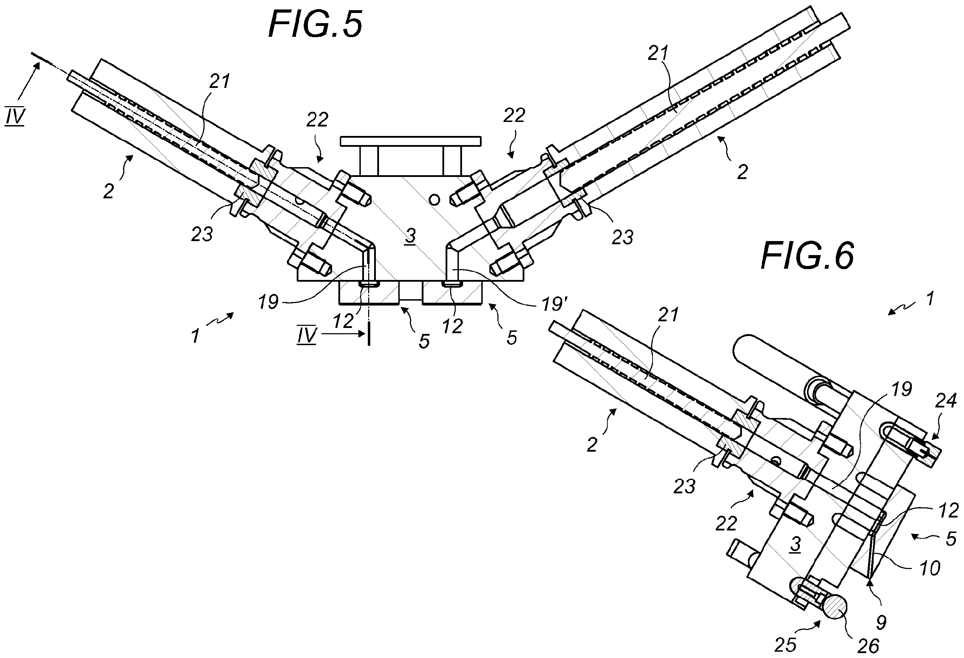

Le système d'extrusion (1) de l'invention tel que représenté sur les figures 3 à 6 comporte un dispositif d'alimentation (2) en matière thermoplastique qui alimente un bloc de distribution (3) prévu pour la distribution de matière thermoplastique (4) en fusion au travers d'une filière d'extrusion (5) pour la déposer et la superposer en couches (6, 6', 6") sur un support (7) en vue de fabriquer un objet tridimensionnel (8).

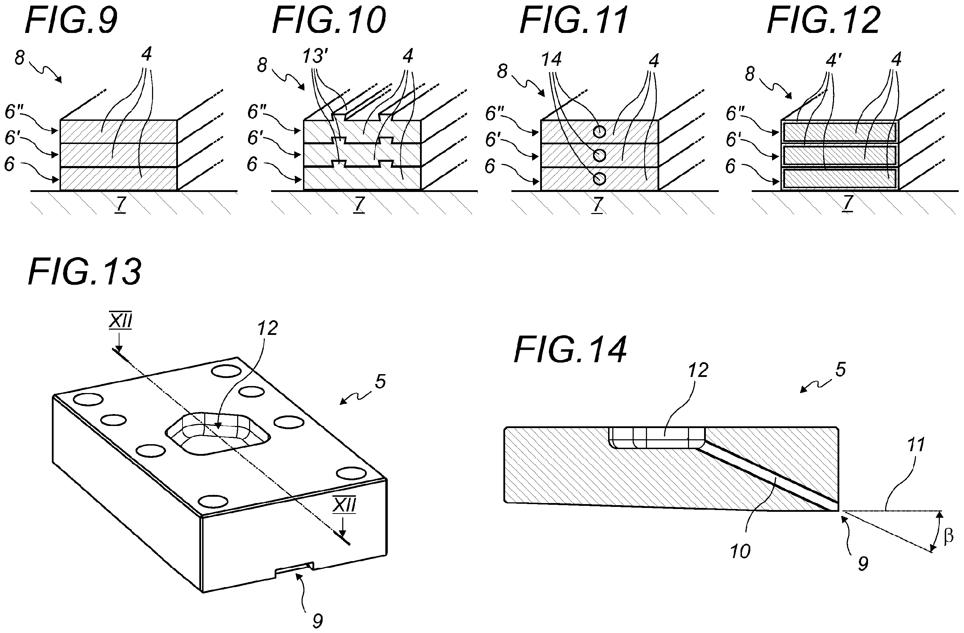

La filière d'extrusion (5) telle que représentée selon différentes variantes sur les figures 13 à 20 est notamment spécifique en ce qu'elle comporte au moins un orifice d'extrusion (9) alimenté en matière thermoplastique (4) par un canal de passage (10) et présentant un contour de forme déterminé, ledit orifice d'extrusion (9) étant situé latéralement dans la partie inférieure de la filière d'extrusion (5).

Ainsi, lorsque la filière d'extrusion (5) est considérée droite (non inclinée) comme sur les différentes figures, l'orifice d'extrusion (9) présente un passage de sortie orienté de sorte que la matière thermoplastique (4) est expulsée selon un axe d'extrusion (11) situé dans un plan horizontal.

De même, dans le cas le plus classique où le support (7) est une surface horizontale, le plan de dépose de la matière thermoplastique (4) extrudée est également horizontal et la matière thermoplastique (4) est expulsée de manière horizontale, là où elle serait expulsée de manière verticale avec une filière d'extrusion classique.

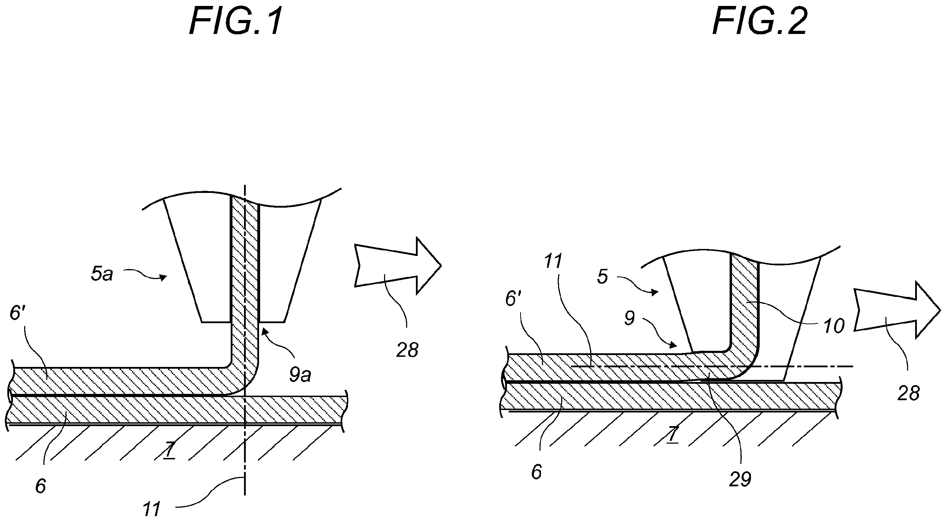

La filière d'extrusion (5) telle que représentée de manière schématique sur la figure 2, se distingue ainsi des filières d'extrusion classiques et antérieurs (5a) telles que représentées de manière schématique sur la figure 1, dans lesquelles l'orifice d'extrusion (9a) est situé en sous-face de la partie inférieure de la filière d'extrusion, dans le prolongement vertical de celle-ci, et non pas latéralement.

Sur les figures 1 et 2, le sens de déplacement des filières (5, 5a) est indiqué par une flèche (28).

Selon une variante préférée, en partie distale située juste avant l'orifice d'extrusion (9), le canal de passage (10) présente un conduit de sortie (29) qui se prolonge perpendiculairement à l'axe général du système d'extrusion (1) de l'invention.

Ainsi, si on considère que le système d'extrusion (1) de l'invention se prolonge selon un axe vertical, le conduit de sortie (29) se prolonge selon un axe horizontal.

Bien entendu, lorsque la filière d'extrusion (5) est inclinée, ce conduit de sortie (29) n'est plus horizontal mais se trouve inclinée avec l'ensemble de la filière d'extrusion (5).

Comme cela est représentée sur la figure 14, au moins dans sa partie distale, le canal de passage (10) fait un angle β strictement inférieur à 90° par rapport à l'axe d'extrusion (11), préférentiellement inférieur à 60° par rapport à l'axe d'extrusion (11) et plus préférentiellement inférieur à 30° par rapport à l'axe d'extrusion (11).

Bien entendu, la filière d'extrusion (5) peut présenter plusieurs canaux de passage (10) dans le cas où elle est prévue pour extruder simultanément ou non plusieurs matières thermoplastiques (4, 4').

En effet, la filière d'extrusion (5) peut être prévue pour réaliser de la mono-extrusion (extrusion d'une seule matière thermoplastique), de la co-extrusion (extrusion simultanée de plusieurs matières thermoplastiques) ou de la multi-extrusion (extrusion successive de plusieurs matières thermoplastiques).

Dans le cas de la mono-extrusion, le système d'extrusion (1) de l'invention comprend un dispositif d'alimentation (2) en matière thermoplastique qui alimente un bloc de distribution (3) relié à une filière d'extrusion (5).

Dans le cas de la co-extrusion, le système d'extrusion (1) de l'invention comprend plusieurs dispositifs d'alimentation (2) en matière thermoplastique qui alimentent chacun un même bloc de distribution (3) relié à une même filière d'extrusion (5).

Dans le cas de la multi-extrusion, le système d'extrusion (1) de l'invention comprend plusieurs dispositifs d'alimentation (2) en matière thermoplastique qui alimentent chacun un même bloc de distribution (3) relié à une plusieurs filières d'extrusion (5).

Le système d'extrusion (1) de l'invention représenté sur les figures 3 à 6 est un système d'extrusion (1) multi-extrusion, c'est-à-dire un système d'extrusion (1) qui permet de déposer plusieurs matières thermoplastiques distinctes simultanément ou de façon alternée.

L'orifice d'extrusion (9) présente une surface d'extrusion qui peut être quelconque, qui s'étend dans un plan présentant préférentiellement un angle compris entre 45° et 90°, et plus préférentiellement un angle compris entre 80° et 90° par rapport au plan de dépose de la matière thermoplastique (4) extrudée. Il peut cependant présenter une autre orientation, dans le cas par exemple où l'orifice d'extrusion (9) serait biseauté (non représenté).

La filière d'extrusion (5) est également spécifique en ce que l'orifice d'extrusion (9) présente une largeur supérieure à sa hauteur, préférentiellement avec une largeur supérieure à une fois et demi sa hauteur, et plus préférentiellement avec une largeur supérieure à deux fois sa hauteur.

Cela permet notamment de déposer la matière thermoplastique (4) fondue sous la forme d'une bande, dont la largeur dépend des dimensions de l'orifice d'extrusion (9). La formation de couches (6, 6', 6") superposées de matière thermoplastique (4) sous la forme de bandes permet de fabriquer des objets tridimensionnels (8) de manière beaucoup plus rapide qu'avec les systèmes antérieurs où seul un fil de matière est déposé à chaque passage de la filière.

L'orifice d'extrusion (9) présente préférentiellement un contour de forme générale sensiblement rectangulaire.

Sur les figures 9 à 12 sont représentés différents exemples de couches (6, 6', 6") superposées de matière(s) thermoplastique(s) (4, 4').

Sur la figure 9, les couches (6, 6', 6") présentent une section de forme rectangulaire. Il s'agit par exemple de couches (6, 6', 6") réalisées par une filière d'extrusion (5) selon l'invention représentée sur les figures 13 et 14.

En partie supérieure, la filière d'extrusion (5) représentée sur les figures 13 et 14 comporte une chambre d'alimentation (12) en matière thermoplastique (4) prévue pour être alimentée en matière thermoplastique (4) fondue par le bloc de distribution (3) sur lequel elle est montée, ladite chambre d'alimentation (12) alimentant à son tour le canal de passage (10) en matière thermoplastique (4).

Sur la figure 10, les couches (6, 6', 6") présentent une section de forme rectangulaire avec une forme en contre-dépouille sur leur face supérieure. Il s'agit par exemple de couches (6, 6', 6") réalisées par une filière d'extrusion (5) selon l'invention représentée sur les figures 18 à 20.

Dans ce but, la filière d'extrusion (5) représentée sur les figures 18 à 20 présente un orifice d'extrusion (9) dont le contour de forme comporte au moins une forme en creux ou en relief (13) dans sa partie opposée au plan de dépose de la matière thermoplastique (4) extrudée, c'est-à-dire dans sa partie supérieure telle que représentée sur les figures. Ainsi, la matière thermoplastique fondue déposée sur une couche (6') présente une forme en contre-dépouille (13') sur sa face supérieure alors que sa face inférieure vient épouser les formes de la forme en creux ou en relief (13) de la couche inférieure précédente (6). Après rigidification de la matière thermoplastique (4), cette forme en contre-dépouille (13') permet de renforcer la cohésion des différentes couches (6, 6', 6").

Il s'agit préférentiellement d'une forme en relief (13), par exemple en queue d'aronde tel que cela est représenté sur la figure 10.

Sur la figure 11, les couches (6, 6', 6") présentent une section de forme rectangulaire avec un renfort continu (14), par exemple de type fibre de verre, fibre de carbone, fil métallique, fil de textile ou de tout autre type connu. Il s'agit par exemple de couches (6, 6', 6") réalisées par une filière d'extrusion (5) selon l'invention représentée sur les figures 18 à 20.

Dans ce but, la filière d'extrusion (5) représentée sur les figures 18 à 20 présente un canal de passage (10') supplémentaire dans lequel est introduit au moins un renfort continu (14) et qui communique avec l'orifice d'extrusion (9) de sorte que ledit renfort continu (14) soit déposé simultanément avec la matière thermoplastique (4) extrudée. Bien que sur la figure 11, les couches (6, 6', 6") présentent une section de forme rectangulaire avec un seul renfort continu (14), plusieurs renforts longs (14) peuvent introduits simultanément avec la matière thermoplastique (4) extrudée.

Ce renfort continu (14) est préférentiellement enrobé par la matière thermoplastique (4) extrudée lors de sa dépose.

Le renfort continu (14) permet notamment de renforcer mécaniquement l'objet tridimensionnel (8) fabriqué, mais il permet aussi par exemple de noyer des fils électriques ou des fibres optiques dans celui-ci.

Sur la figure 12, les couches (6, 6', 6") présentent une section de forme rectangulaire et sont formées d'un coeur constitué d'une première matière thermoplastique (4) et enveloppé par une peau constituée d'une seconde matière thermoplastique (4'). Il s'agit par exemple de couches (6, 6', 6") réalisées par une filière d'extrusion (5) selon l'invention représentée sur les figures 15 à 17.

La filière d'extrusion (5) représentée sur les figures 15 à 17 comporte un premier canal de passage (10) pour une première matière thermoplastique (4) et un second canal de passage (10") pour une seconde matière thermoplastique (4'), par exemple différente de la première matière thermoplastique (4), lesdits canaux de passage débouchant tous deux au niveau d'un même orifice d'extrusion (9). Dans cette filière d'extrusion (5) de co-extrusion, le premier canal de passage (10) est prévu sensiblement au centre du second canal de passage (10") de sorte que la matière thermoplastique (4) extrudée déposée soit formée d'un coeur constitué de la première matière thermoplastique (4) et enveloppé par une peau constituée de la seconde matière thermoplastique (4').

En partie supérieure, la filière d'extrusion (5) représentée sur les figures 15 à 17 comporte une première chambre d'alimentation (12) prévue pour la première matière thermoplastique (4) et une seconde chambre d'alimentation (12') prévue pour la seconde matière thermoplastique (4').

Sur la figure 16 on peut voir le premier canal de passage (10) pour la formation du coeur, tandis que sur la figure 17 on peut voir le second canal de passage (10") pour la formation de la peau, ainsi que la zone d'enrobage (15) du coeur par la peau.

Cette filière d'extrusion (5) de co-extrusion peut bien-entendu être adaptée pour la co-extrusion de plus de deux matières thermoplastiques (4, 4').

On notera que sur les différentes figures, les couches (6, 6', 6") présentent une section de forme rectangulaire, car cette forme est préférée, mais la filière d'extrusion (5) selon l'invention peut bien entendu être adaptée pour former des couches (6, 6', 6") présentent une section de n'importe quelle forme.

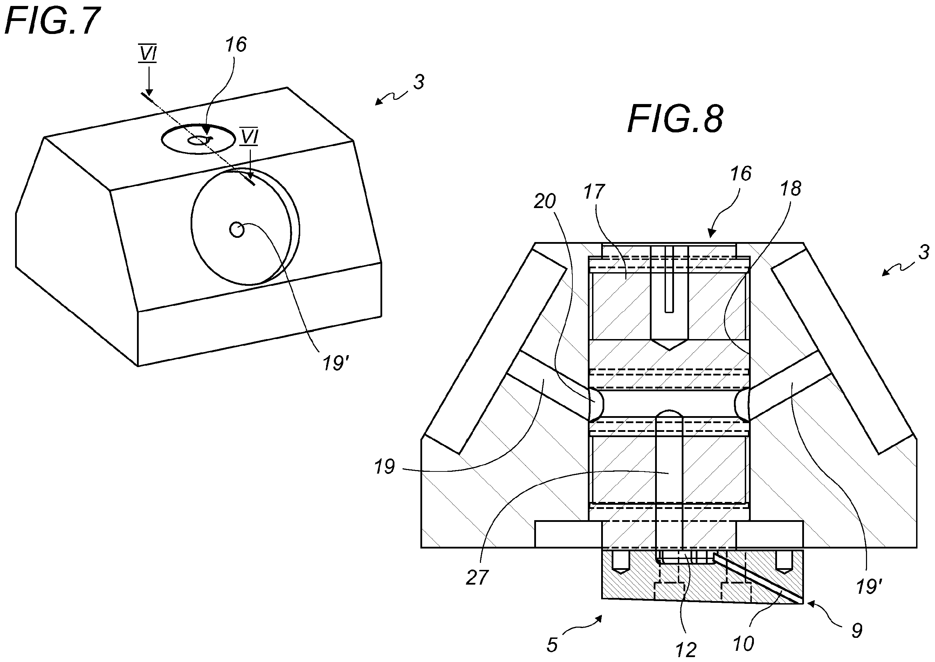

Selon l'invention représentée sur les figures 7 et 8, le bloc de distribution (3) peut comporter au moins une broche rotative (16) sur laquelle est fixée au moins une filière d'extrusion (5) de manière à tourner avec cette dernière dans un plan parallèle à la face de dépose de la matière thermoplastique (4) extrudée. En effet, dans le cas de la dépose de matière thermoplastique (4) fondue sous la forme d'une bande, la rotation de la filière d'extrusion (5) permet de suivre n'importe quel tracé, sans avoir à interrompre la dépose de matière thermoplastique (4) ou à former des surépaisseurs dues à des bourrelets. Un tel tracé est donné à titre d'exemple sur la figure 21, où le sens de déplacement de la filière (5) est indiqué par une flèche (28). Sur cette figure, la transition entre les couches (6, 6') est volontairement représentée marquée pour des raisons de clarté. En réalité, cette transition peut être beaucoup plus discrète, voir indécelable.

La broche rotative (16) est pièce de forme sensiblement cylindrique (17) logée à rotation dans un évidement cylindrique (18) prévu dans le corps du bloc de distribution (3).

Le bloc de distribution (3) représenté sur les figures 7 et 8 est prévu pour réaliser une co-extrusion de deux matières thermoplastiques (4, 4').

Dans ce but, il comprend un premier canal de passage (19) pour une matière thermoplastique (4), et un second canal de passage (19') pour une seconde matière thermoplastique (4'), chaque canal de passage (19, 19') étant alimenté en matière thermoplastique (4, 4') par un dispositif d'alimentation (2) qui lui est dédié.

La broche rotative (16) comporte au moins une gorge annulaire (20) ouverte vers la face interne de l'évidement cylindrique (18) du corps du bloc de distribution (3), cette gorge annulaire (20) communiquant à la fois avec les canaux de passage (10, 10") de la filière d'extrusion (5) et avec au moins un canal de passage (19, 19') prévu dans le corps du bloc de distribution (3), par exemple par l'intermédiaire d'au moins un canal de passage central (27).

Dans le bloc de distribution (3) représenté sur les figures 7 et 8 et prévu pour réaliser une co-extrusion de deux matières thermoplastiques (4, 4'), les deux canaux de passage (19, 19') du bloc communiquent avec la gorge annulaire (20) pour alimenter un même canal de passage (10) de la filière d'extrusion (5).

Bien que cela ne soit pas représenté sur les figures, il est bien entendu possible de prévoir plusieurs gorges annulaires (20) qui communiquent chacune avec un canal de passage (19, 19') différent prévu dans le corps du bloc de distribution (3) pour alimenter des canaux de passage (10, 10") distincts de la filière d'extrusion (5).

De même, bien que cela ne soit pas représenté sur les figures, il est bien entendu possible d'associer une broche rotative (16) à un bloc de distribution (3) prévu pour réaliser une co-extrusion de deux matières thermoplastiques (4, 4').

De manière classique, le système d'extrusion (1) selon l'invention comprend des organes d'actionnement (non représentés) pour déplacer le bloc de distribution (3) en translation selon trois axes orthogonaux ou suivant un déplacement vectoriel et pour déplacer la broche rotative (16) en rotation dans un plan parallèle au plan de dépose de la matière thermoplastique (4) extrudée. Les organes d'actionnement peuvent par exemple comporter un système automatisé de type robot multiaxes ou portique.

Le système d'extrusion (1) selon l'invention comprend au moins un dispositif d'alimentation (2) en matière thermoplastique (4), de préférence sous la forme d'une vis d'extrusion (21), monté sur le bloc de distribution (3) par l'intermédiaire d'une pièce d'adaptation (22) et d'une bague de centrage (23).

En effet, bien que l'invention permette de déposer de la matière thermoplastique à partir d'un filament ou d'un jonc de matière thermoplastique fondu au moyen d'un dispositif d'alimentation classique pour ce genre de dispositif, l'utilisation d'un dispositif d'alimentation (2) en matière thermoplastique (4) sous la forme d'une vis d'extrusion (21) permet d'utiliser une matière thermoplastique (4) sous la forme de granulés qui sont fondus dans une vis d'extrusion, et permet notamment la transformation de plusieurs matières thermoplastiques (4) en simultanée.

Selon une variante de l'invention représentée sur les figures 3 à 6, le système d'extrusion (1) peut comporter un dispositif de préchauffage (24) qui réchauffe le plan de dépose de la matière thermoplastique (4) extrudée précédemment en amont de la filière d'extrusion (5) avant la dépose d'une nouvelle couche de matière thermoplastique (4) ou tout autre système de chauffage permettant de réchauffer superficiellement la surface de la couche précédente.

Selon un mode de réalisation préféré, le dispositif de préchauffage (24) comporte une résistance chauffante qui chauffe l'air à une température déterminée avant de la pulser en continu sous pression vers l'extérieur au niveau du plan de dépose de la matière thermoplastique (4) extrudée précédemment (couche précédemment déposée) avant dépose de la matière fondue pour constituer la couche suivante.

Selon une variante supplémentaire de l'invention représentée sur les figures 3 à 6, le système d'extrusion (1) selon l'invention peut également comporter un dispositif d'appui (25) qui exerce une pression sur la couche de matière thermoplastique (4) fondue qui est déposée. Ce dispositif d'appui (25) peut par exemple comporter un cylindre presseur (26) monté sur ressort, piloté par un vérin sous pression, asservi en déplacement par un système à vis ou associé à tout autre système permettant d'exercer une force. Le dispositif d'appui (25) est situé en aval de la filière d'extrusion (5). Ce dispositif d'appui (25) vient exercer une pression sur la couche (6') de matière thermoplastique (4) fondue qui vient d'être déposée, afin d'améliorer le contact entre les deux couches successives et de la faire mieux adhérer à la couche (6) précédente.

Selon une autre variante supplémentaire de l'invention la filière d'extrusion (5) peut être prévue pivotante dans un plan vertical selon un angle d'inclinaison +/-a par rapport au support (7). Cet angle α est tel que 0°< α≤90°, préférentiellement tel que 0°<α≤70°, et plus préférentiellement tel que 0°< α≤50°.

Une filière d'extrusion (5) peut être prévue pivotante indépendamment du système d'extrusion (1) selon l'invention, ou être prévue pivotante conjointement avec ledit système.

Un système d'extrusion (1) pivotant est représenté sur la figure 22, où il est incliné un angle d'inclinaison d'environ 10°.

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente sans sortir du cadre de la présente invention tel que défini par les revendications annexées et une étape décrite de mise en oeuvre du procédé peut être remplacée par une étape équivalente sans sortir du cadre de l'invention tel que défini par les revendications.

Ainsi, on peut par exemple envisager de combiner une filière d'extrusion selon l'invention avec une filière d'extrusion antérieure, afin notamment de permettre à l'utilisateur de déposer de la matière thermoplastique soit dans un plan parallèle au plan de dépose, soit dans un plan perpendiculaire au plan de dépose.

## Revendications

1. Bloc de distribution (3) prévu pour la distribution de matière thermoplastique (4) en fusion pour la déposer et la superposer en couches (6, 6', 6") sur un support (7) en vue de fabriquer un objet tridimensionnel (8)
- le bloc de distribution (3) comporte au moins une filière d'extrusion (5) et une broche rotative (16) sur laquelle la filière d'extrusion (5) est fixée de manière à tourner avec cette dernière dans un plan parallèle à la face de dépose de la matière thermoplastique (4) extrudée ;
- la filière d'extrusion (5) est prévue pour le dépôt et la superposition de couches (6, 6', 6") de matière thermoplastique (4) en fusion sur un support (7) selon un plan de dépose en vue de fabriquer un objet tridimensionnel (8), ladite filière d'extrusion (5) comportant au moins un canal de passage (10) pour alimenter en matière thermoplastique (4) au moins un orifice d'extrusion (9) à travers lequel la matière thermoplastique (4) est expulsée hors de la filière d'extrusion (5) selon une direction définissant l'axe d'extrusion de la filière d'extrusion (5), l'orifice d'extrusion (9) étant situé latéralement dans la partie inférieure de la filière d'extrusion (5) de sorte que, lorsque la filière d'extrusion (5) présente une inclinaison nulle par rapport à un plan vertical, la matière thermoplastique (4) est expulsée hors dudit orifice d'extrusion (9) selon un axe d'extrusion (11) sensiblement horizontal ; et le bloc d'extrusion est **caractérisé en ce que**:
- la broche rotative (16) est une pièce de forme sensiblement cylindrique (17) logée en rotation dans un évidement cylindrique (18) prévu dans le corps du bloc de distribution (3) et la broche rotative (16) comporte au moins une gorge annulaire (20) ouverte vers la face interne de l'évidement cylindrique (18) du corps du bloc de distribution (3), cette gorge annulaire (20) communiquant à la fois avec les canaux de passage de la filière d'extrusion (5) et avec au moins un canal de passage (10) prévu dans le corps du bloc de distribution (3) et communiquant avec un dispositif d'alimentation (2) en matière thermoplastique (4).

2. Bloc de distribution (3) selon la revendication 1, **caractérisé en ce que** le canal de passage (10), au moins dans sa partie distale, fait un angle β strictement inférieur à 90° par rapport à l'axe d'extrusion (11), préférentiellement inférieur à 60° par rapport à l'axe d'extrusion (11) et plus préférentiellement inférieur à 30° par rapport à l'axe d'extrusion (11).

3. Bloc de distribution (3) selon la revendication 1 ou 2, **caractérisé en ce que** l'orifice d'extrusion (9) présente une surface d'extrusion s'étendant dans un plan présentant un angle préférentiellement compris entre 45° et 90°, et plus préférentiellement compris entre 80° et 90°, par rapport au plan de dépose de la matière thermoplastique (4) extrudée.

4. Bloc de distribution (3) selon l'une quelconque des revendications précédentes, **caractérisé en ce que** l'orifice d'extrusion (9) présente une largeur supérieure à sa hauteur, préférentiellement avec une largeur supérieure à une fois et demi sa hauteur, et plus préférentiellement avec une largeur supérieure à deux fois sa hauteur.

5. Bloc de distribution (3) selon l'une quelconque des revendications précédentes, **caractérisé en ce que** l'orifice d'extrusion (9) présente un contour de forme générale sensiblement rectangulaire.

6. Bloc de distribution (3) selon l'une quelconque des revendications précédentes, **caractérisé en ce que** le contour de forme de l'orifice d'extrusion (9) comporte au moins une forme en creux ou en relief (13) dans sa partie opposée au plan de dépose de la matière extrudée.

7. Bloc de distribution (3) selon l'une quelconque des revendications précédentes, **caractérisé en ce que** la filière d'extrusion (5) comporte en outre au moins un canal de passage (10') supplémentaire pour introduire au moins un renfort continu (14) et qui communique avec l'orifice d'extrusion (9) de sorte que ledit renfort continu (14) soit déposé simultanément avec la matière thermoplastique (4) extrudée.

8. Bloc de distribution (3) selon la revendication précédente, **caractérisée en ce que** le renfort continu (14) peut être enrobé par la matière thermoplastique (4) extrudée lors de sa dépose.

9. Bloc de distribution (3) selon l'une quelconque des revendications précédentes, **caractérisée en ce que** la filière d'extrusion (5) comporte un premier canal de passage (10) pour une première matière thermoplastique (4) et un second canal de passage (10") pour une seconde matière thermoplastique (4') différente de la première matière thermoplastique (4), lesdits canaux de passage débouchant tous deux au niveau d'un même orifice d'extrusion (9), le premier canal de passage (10) étant prévu sensiblement au centre du second canal de passage (10") de sorte que la matière thermoplastique (4) extrudée déposée est formée d'un coeur constitué de la première matière thermoplastique (4) et enveloppé par une peau constituée de la seconde matière thermoplastique (4').

10. Système d'extrusion (1) comprenant un bloc de distribution (3) selon l'une quelconque des revendications précédentes, **caractérisé en ce qu'**il comprend au moins un dispositif d'alimentation (2) en matière thermoplastique (4) et des organes d'actionnement pour déplacer le bloc de distribution (3) en translation selon trois axes orthogonaux ou suivant un déplacement vectoriel et pour déplacer la broche rotative (16) en rotation dans un plan parallèle au plan de dépose de la matière thermoplastique (4) extrudée.

11. Système d'extrusion (1) selon la revendication 10, **caractérisé en ce qu'**il comporte en outre un dispositif de préchauffage (24) qui pour réchauffer le plan de dépose de la matière thermoplastique (4) extrudée précédemment en amont de la filière d'extrusion (5) avant la dépose d'une nouvelle couche de matière thermoplastique (4) ou un dispositif de chauffage pour réchauffer superficiellement la surface de la couche de matière thermoplastique (4) extrudée précédente.

12. Système d'extrusion (1) selon la revendication 10 ou 11, **caractérisé en ce qu'**il comporte en outre un dispositif d'appui (25) en aval de la filière d'extrusion (5) pour exercer une pression sur la couche de matière thermoplastique (4) fondue qui est déposée.

13. Système d'extrusion (1) selon l'une quelconque des revendications 10 à 12, **caractérisé en ce qu'**au moins au moins une filière d'extrusion (5) est prévue pivotante dans un plan vertical selon un angle d'inclinaison +/-a par rapport au support (7), ledit angle α étant tel que 0°< α≤90°, préférentiellement tel que 0°<α≤70°, et plus préférentiellement tel que 0°< α≤50°.

## Patentansprüche

1. Verteilerblock (3), vorgesehen zur Verteilung einer Schmelze aus thermoplastischem Material (4) zum Auftragen und Überlagern in Schichten (6, 6', 6") auf einem Träger (7), zum Zweck der Herstellung eines dreidimensionalen Objektes (8)
- der Verteilerblock (3) enthält mindestens eine Extrusionsdüse (5) und eine Drehspindel (16) auf der die Extrusionsdüse (5) so befestigt ist, dass sie sich zusammen mit der Spindel in einer Ebene parallel zur Auftragsfläche des extrudierten thermoplastischen Materials (4) dreht;
- die Extrusionsdüse (5) ist vorgesehen zum Auftragen und Überlagern von Schichten (6, 6', 6") einer Schmelze aus thermoplastischem Material (4) auf einem Träger (7) entsprechend einer Auftragsebene, zwecks Herstellung eines dreidimensionalen Objektes (8), dabei enthält diese Extrusionsdüse (5) mindestens einen Durchführkanal (10) zur Versorgung mindestens einer Extrusionsöffnung (9) mit thermoplastischem Material (4), durch den das thermoplastische Material (4) aus der Extrusionsdüse (5) ausgestoßen wird, in einer Richtung, die die Extrusionsachse der Extrusionsdüse (5) definiert, die Extrusionsöffnung (9) ist dabei seitlich angeordnet, im unteren Teil der Extrusionsdüse (5), so dass, wenn die Extrusionsdüse (5) eine Neigung von Null bezogen auf eine vertikale Ebene aufweist, das thermoplastische Material (4) aus dieser Extrusionsöffnung (9) ausgestoßen wird, entsprechend einer im Wesentlichen horizontalen Extrusionsachse (11); und. der Extrusionsblock ist **dadurch gekennzeichnet, dass** es sich bei:
- der Drehspindel (16) um ein Teil mit einer im Wesentlichen zylindrischen (17) Form handelt, drehbar angeordnet in einer zylindrischen Aussparung (18), die im Körper des Verteilerblocks (3) vorgesehen ist und die Drehspindel (16) mindestens eine ringförmige Kehle (20) enthält, offen zur Innenseite der zylindrischen Aussparung (18) des Körpers des Verteilerblocks (3), diese ringförmige Kehle (20) steht sowohl mit den Durchführkanälen der Extrusionsdüse (5) wie mit mindestens einem Durchführkanal (10) in Verbindung, der im Körper des Verteilerblocks (3) vorgesehen ist und mit einer Zufuhrvorrichtung (2) für thermoplastisches Material (4) verbunden ist.

2. Verteilerblock (3) nach Anspruch 1, **dadurch gekennzeichnet, dass** der Durchführkanal (10), mindestens in seinem distalen Teil, einen Winkel β von deutlich unter 90° bezogen auf die Extrusionsachse (11) aufweist, noch besser von weniger als 60° bezogen auf die Extrusionsachse (11) und am besten von weniger als 30° bezogen auf die Extrusionsachse (11).

3. Verteilerblock (3) nach Anspruch 1 oder 2, **dadurch gekennzeichnet, dass** die Extrusionsöffnung (9) über eine Extrusionsfläche verfügt, die in einer Ebene verläuft, die einen Winkel von vorzugsweise zwischen 45° und 90° aufweist und noch besser zwischen 80° und 90°, bezogen auf die Auftragsebene des extrudierten thermoplastischen Materials (4).

4. Verteilerblock (3) nach irgendeinem der vorangehenden Ansprüche, **dadurch gekennzeichnet, dass** die Extrusionsöffnung (9) eine Breite hat, die größer ist als ihre Höhe, noch besser eine Breite, die größer ist als das Eineinhalbfache der Höhe und noch besser, eine Breite von mehr als dem Doppelten der Höhe.

5. Verteilerblock (3) nach irgendeinem der vorangehenden Ansprüche, **dadurch gekennzeichnet, dass** die Extrusionsöffnung (9) eine im Wesentlichen rechteckige Kontur hat.

6. Verteilerblock (3) nach irgendeinem der vorangehenden Ansprüche, **dadurch gekennzeichnet, dass** die Kontur der Form der Extrusionsöffnung (9) mindestens eine konkave oder konvexe (13) Form in dem Teil, der der Auftragsebene des extrudierten Materials gegenüberliegt, enthält.

7. Verteilerblock (3) nach irgendeinem der vorangehenden Ansprüche, **dadurch gekennzeichnet, dass** die Extrusionsdüse (5) außerdem mindestens einen zusätzlichen Durchführkanal (10') enthält, um mindestens eine kontinuierliche Verstärkung (14) zuzuführen und der mit der Extrusionsöffnung (9) in Verbindung steht, so dass diese kontinuierliche Verstärkung (14) gleichzeitig mit dem extrudieren thermoplastischen Material (4) aufgetragen wird.

8. Verteilerblock (3) nach dem vorangehenden Anspruch, **dadurch gekennzeichnet, dass** die kontinuierliche Verstärkung (14) vom thermoplastischen Material (4), das bei ihrem Auftrag extrudiert wurde, umhüllt wird.

9. Verteilerblock (3) nach irgendeinem der vorangehenden Ansprüche, **dadurch gekennzeichnet, dass** die Extrusionsdüse (5) einen ersten Durchführkanal (10) für ein erstes thermoplastisches Material (4) enthält und einen zweiten Durchführkanal (10") für ein zweites thermoplastisches Material (4'), das sich vom ersten thermoplastischen Material (4) unterscheidet, diese Durchführkanäle münden beide in Höhe derselben Extrusionsöffnung (9), der erste Durchführkanal (10) ist im Wesentlichen im Zentrum des zweiten Durchführkanals (10") vorgesehen, so dass das extrudierte, aufgetragene thermoplastische Material (4) aus einem Kern besteht, der vom ersten thermoplastischen Material (4) gebildet wird und von einer Haut umgeben ist, die aus dem zweiten thermoplastischen Material (4') besteht.

10. Extrusionssystem (1) mit einem Verteilerblock (3) nach irgendeinem der vorangehenden Ansprüche, **dadurch gekennzeichnet, dass** es mindestens eine Zufuhrvorrichtung (2) für thermoplastisches Material (4) sowie Antriebselemente enthält, um den Verteilerblock (3) nach drei orthogonalen Achsen zu verschieben oder entsprechend einer vektoriellen Verschiebung und um die Drehspindel (16) in Drehung zu versetzen in einer Ebene parallel zur Auftragsebene des extrudierten thermoplastischen Materials (4).

11. Extrusionssystem (1) nach Anspruch 10, **dadurch gekennzeichnet, dass** es außerdem eine Vorwärmvorrichtung (24) enthält, zur Erwärmung der Auftragsebene des zuvor extrudierten thermoplastischen Materials (4) vor der Extrusionsdüse (5) vor dem Auftragen einer neuen Schicht thermoplastischen Materials (4) oder eine Heizvorrichtung zur oberflächlichen Erwärmung der Oberfläche der zuvor extrudierten thermoplastischen Materialschicht (4).

12. Extrusionssystem (1) nach Anspruch 10 oder 11, **dadurch gekennzeichnet, dass** es außerdem eine Stützvorrichtung (25) hinter der Extrusionsdüse (5) enthält, um einen Druck auf die geschmolzene Schicht thermoplastischen Materials (4) auszuüben, die darauf aufgetragen wird.

13. Extrusionssystem (1) nach einem beliebigen der Ansprüche 10 bis 12, **dadurch gekennzeichnet, dass** mindestens eine Extrusionsdüse (5) in vertikaler Ebene schwenkbar vorgesehen ist, entsprechend einem Neigungswinkel von +/-α, bezogen auf den Träger (7), dieser Winkel α ist 0°<α<90°, besser noch 0°<α<70°, und noch besser 0°<α<50°.

## Claims

1. A distribution block (3) provided for distributing molten thermoplastic material (4) for depositing and superimposing it in layers (6, 6', 6") on a support (7) with a view to fabricating a three-dimensional object (8):
- the distribution block (3) comprising at least one extrusion die (5) and a rotary spindle (16) to which the extrusion die (5) is fastened in a manner such as to rotate with the extrusion die in a plane parallel to the deposition face of the extruded thermoplastic material (4);
- the extrusion die (5) being provided for depositing and superimposing layers (6, 6 ', 6") of molten thermoplastic material (4) on a support (7) in accordance with a deposition plane with a view to fabricating a three-dimensional object (8), said extrusion die (5) comprising at least one flow channel (10) for supplying at least one extrusion orifice (9) with thermoplastic material (4) through which the thermoplastic material (4) is expelled out of the extrusion die (5) in accordance with a direction defining the extrusion axis of the extrusion die (5), the extrusion orifice (9) being located laterally in the lower part of the extrusion die (5) in a manner such that, when the extrusion die (5) has a zero inclination with respect to a vertical plane, the thermoplastic material (4) is expelled out of said extrusion orifice (9) in accordance with a substantially horizontal extrusion axis (11); and the extrusion block is **characterized in that**:
- the rotary spindle (16) is a substantially cylindrical part (17) which is rotatably housed in a cylindrical recess (18) provided in the body of the distribution block (3) and the rotary spindle (16) comprises at least one annular groove (20) which is open towards the internal face of the cylindrical recess (18) of the body of the distribution block (3), this annular groove (20) communicating both with the flow channels of the extrusion die (5) and with at least one flow channel (10) provided in the body of the distribution block (3) and communicating with a device (2) for supplying thermoplastic material (4).

2. The distribution block (3) as claimed in claim 1, **characterized in that** in at least its distal portion, the flow channel (10) forms an angle b which is strictly less than 90° with respect to the extrusion axis (11), preferably less than 60° with respect to the extrusion axis (11) and more preferably less than 30° with respect to the extrusion axis (11).

3. The distribution block (3) as claimed in claim 1 or 2, **characterized in that** the extrusion orifice (9) has an extrusion surface extending in a plane having an angle which is preferably in the range 45° to 90° and more preferably in the range 80° to 90° with respect to the plane of deposition of the extruded thermoplastic material (4).

4. The distribution block (3) as claimed in any one of the preceding claims, **characterized in that** the width of the extrusion orifice (9) is greater than its height, preferably with a width which is greater than one and a half times its height, and more preferably with a width which is greater than twice its height.

5. The distribution block (3) as claimed in any one of the preceding claims, **characterized in that** the extrusion orifice (9) has an outline which is generally substantially rectangular in shape.

6. The distribution block (3) as claimed in any one of the preceding claims, **characterized in that** the outline of the shape of the extrusion orifice (9) comprises at least one recessed or raised shape (13) in its portion opposite to the deposition plane of the extruded material.

7. The distribution block (3) as claimed in any one of the preceding claims, **characterized in that** the extrusion die (5) further comprises at least one additional flow channel (10') for introducing at least one continuous reinforcement (14) and which communicates with the extrusion orifice (9) in a manner such that said continuous reinforcement (14) is deposited simultaneously with the extruded thermoplastic material (4).

8. The distribution block (3) as claimed in the preceding claim, **characterized in that** the continuous reinforcement (14) may be coated with the extruded thermoplastic material (4) during its deposition.

9. The distribution block (3) as claimed in any one of the preceding claims, **characterized in that** the extrusion die (5) comprises a first flow channel (10) for a first thermoplastic material (4) and a second flow channel (10") for a second thermoplastic material (4') which is different from the first thermoplastic material (4), said flow channels both emerging at the level of the same extrusion orifice (9), the first flow channel (10) being provided substantially at the centre of the second flow channel (10") in a manner such that the extruded thermoplastic material (4) which is deposited is formed by a core constituted by the first thermoplastic material (4) and surrounded by a skin consisting of the second thermoplastic material (4').

10. An extrusion system (1) comprising a distribution block (3) as claimed in any one of the preceding claims, **characterized in that** it comprises at least one device (2) for supplying thermoplastic material (4) and actuating means for displacing the distribution block (3) in translation in accordance with three orthogonal axes or in accordance with a vector displacement and for displacing the rotary spindle (16) in rotation in a plane parallel to the plane for depositing the extruded thermoplastic material (4).

11. The extrusion system (1) as claimed in claim 10, **characterized in that** it further comprises a preheating device (24) for heating the plane for depositing the thermoplastic material (4) which has previously been extruded upstream of the extrusion die (5) before depositing a new layer of thermoplastic material (4), or a heating device for superficially heating the surface of the layer of thermoplastic material (4) which has previously been extruded.

12. The extrusion system (1) as claimed in claim 10 or 11, **characterized in that** it further comprises a bearing device (25) downstream of the extrusion die (5) in order to exert a pressure on the layer of molten thermoplastic material (4) which is deposited.

13. The extrusion system (1) as claimed in any one of claims 10 to 12, **characterized in that** at least one extrusion die (5) is provided which pivots in a vertical plane through an angle of inclination of ± α with respect to the support (7), said angle α being such that 0° <α ≤ 90°, preferably such that 0° <α ≤ 70°, and more preferably such that 0° <α ≤ 50°.
